# FASCICULE DE BREVET EUROPEEN

(11) **EP 3 953 133 B1**
(45) Date de publication et mention de la délivrance du brevet: **09.08.2023**
(21) Numéro de dépôt: 20716803.0
(22) Date de dépôt: 07.04.2020
(51) Int. Cl.: B29C 37/00, B29C 59/02, B29C 59/00, B29K 77/00, B44C 1/24, B44C 3/08, B29C 45/16

(54) **PROCEDE DE TEXTURATION D'UN POLYAMIDE**
VERFAHREN ZUM TEXTURIEREN EINES POLYAMIDS
METHOD FOR TEXTURING A POLYAMIDE

(30) Priorité: 12.04.2019 FR 1903934
(43) Date de publication de la demande: 16.02.2022
(73) Titulaire: ARKEMA FRANCE, 92700 Colombes (FR)
(72) Inventeur: MONTANARI, Thibaut, 27470 Serquigny (FR); RECOQUILLE, Christelle, 27470 Serquigny (FR)
(86) Numéro de dépôt international: PCT/EP2020/059891
(87) Numéro de publication internationale: WO 2020/208016

(56) Documents cités:
- WO-A1-2006/008358
- US-A1- 2013 216 782
- US-A1- 2013 342 977

## Description

La présente invention concerne un procédé de préparation d'un objet comprenant ou constitué d'un film comprenant au moins une couche (1) comprenant une composition comprenant au moins un polyamide semi-cristallin (Psc), ledit film présentant sur tout ou partie d'au moins une de ses surfaces la texture d'un élément texturant (T).

Elle concerne également les objets obtenus par ledit procédé ainsi que les pièces comprenant au moins un objet obtenu par ledit procédé.

En d'autres termes, la présente invention concerne un procédé de texturation d'un film de polyamide semi-cristallin (Psc) pour obtenir un état de surface particulier dudit film de polyamide semi-cristallin (Psc), c'est-à-dire obtenir l'aptitude à cloner le relief et/ou le toucher de n'importe quel matériaux (texturant) comme par exemple un textile plus ou moins doux, du cuir, du papier, du bois, un végétal comme une feuille d'arbre... dans le but de réaliser une pièce ou un produit présentant visio-tactile avantageux.

Il est connu que les matières plastiques sont généralement considérées comme des matières de médiocre qualité comparées aux matériaux plus traditionnel comme les métaux, les tissus, les bois, les cuirs...

Cependant, le coût de certains matériaux tels que le cuir ou le bois pour des utilisations notamment dans l'automobile ou comme parquet dans les habitations est de plus en plus élevé et devient rédhibitoire.

Ainsi, dans le cadre de l'automobile, un tableau de bord ou l'intérieur de la porte d'automobile constitué de cuir ou de bois n'est pas concevable dans le cadre de véhicules bas de gamme ou moyenne gamme.

De même, un parquet en chêne ou constitué d'essences exotiques dans les appartements représente maintenant un investissement beaucoup trop important.

Néanmoins, les imitations, notamment plastiques de ces objets (tableau de bord, intérieur de portière, parquet...) présentent un rendu et/ou une qualité trop souvent décevant. Il est par ailleurs connu que les matières plastiques ont du mal à rendre des états de surfaces complexes.

Les documents US2013/342977 et US2013/216782 décrivent tous deux un procédé de fabrication d'un objet par moulage injection qui comprend un film (PET et résine à base de polyoléfine respectivement) présentant la texture d'un élément structurant. Néanmoins, les conditions de moulages ne sont pas décrites dans ces deux documents.

Un procédé de fabrication de tels objets est notamment décrit la demande WO 2006/008358 A1 qui concerne des polyamides microcristallins permettant d'avoir une face supérieure apte à bien prendre le grain et à bien rendre les états de surface d'un moule, c'est à dire apte à devenir lisse et brillante (au contact d'une paroi métallique polie de moule suffisamment chaude) ou à devenir mat et grainée (au contact d'une paroi métallique mat ou grainée de moule suffisamment chaude), ou à prendre un aspect brossé.

Ce procédé ne permet cependant pas de reproduire n'importe quel état de surface.

Une alternative dans cette demande prévoit des parois texturantes du moule (ou de tout autre dispositif texturant) qui sont constituées d'un autre matériau que du métal et censée être capable de rendre des états de surface très complexes de matériaux non métallique tels les tissus, les papiers, les cuirs, les bois, les végétaux, etc.

Cependant, les informations essentielles dans la description de cette demande sont en grande partie absentes pour pouvoir obtenir des objets présentant les aspects tels que mentionnés dans cette demande.

Soit les matières plastiques sont solides et trop rigides pour prendre le relief suffisamment, soit elles sont à l'état liquide et vont trop adhérer à la surface, et il sera alors impossible, une fois le plastique re-solidifié, de décoller ce dernier de la paroi texturante (par exemple en tissu).

La présente invention permet donc de résoudre ce problème de caractéristiques essentielles insuffisamment décrites ou non présentes.

La présente invention concerne donc un procédé de préparation d'un objet comprenant au moins un film comprenant au moins une couche (1) comprenant une composition comprenant au moins un polyamide semi-cristallin (Psc), ladite composition, ou optionnellement ledit polyamide semi-cristallin présentant une enthalpie de fusion comprise de 25J/g à 75J/g (1 ère chauffe de DSC selon ISO 11357-3:2013 à 40°C/mn), ledit film présentant sur tout ou partie d'au moins une de ses surfaces la texture d'un élément texturant (T),
caractérisé en ce qu'il comprend les étapes suivantes :
a. Fourniture d'un moule (M) réglé à une température inférieure ou égale à 120°C, en particulier comprise de 20°C à 90°C,
b. Application sur la paroi du moule, d'au moins un élément texturant (T), de préférence d'épaisseur de 20 à 2000 µm, préférentiellement de 50µm à 1000 µm, en particulier de 50µm à 500 µm, en particulier sous forme plane, et présentant au moins partiellement une surface texturée, ladite surface texturée étant sur la face opposée à celle en regard du moule,
c. Application sur la surface texturée dudit élément texturant (T), d'au moins un film (F) comprenant au moins une couche (1) comprenant une composition (CPO) comprenant au moins un polyamide semi-cristallin (Psc), ladite couche (1) étant destinée à être en contact avec la surface texturée de l'élément texturant (T), l'épaisseur de ladite couche (1) étant d'au moins 10µm, en particulier comprise de 10 à 1000µm,
d. Application d'au moins un moyen de chauffe (H) sur ledit film de l'étape (c), pour arriver à une température (TT) du côté du film face au texturant (T), comprise de Tg à la température de fusion (Tm) de la composition (CPO) moins 15°C, la Tm étant mesurée selon ISO 11357-3 :2013, et application d'un moyen de pression (P) sur ledit film pour le mettre en contact avec l'élément texturant (T), avec une pression comprise de 1,5 à 2000 bars, en particulier de 5 bars à 1000 bars, durant un temps t compris de 0,1s à 5h, préférentiellement de 3s à 10 min,
e. Démoulage et obtention de l'objet comprenant ledit film de polyamide semi-cristallin (Psc) et présentant sur tout ou partie d'au moins une de ses surfaces la texture dudit élément texturant (T).

Le moule peut avoir n'importe quelle forme et est notamment de forme concave ou convexe, préférentiellement de forme concave et peut être constitué de n'importe quel matériau du moment que ce matériau est susceptible de résister à la température utilisée dans le procédé de l'invention et donc notamment à au moins 120°C ainsi qu'à au moins la pression maximum de service utilisée dans le procédé et donc à au moins 200 bars.

Le moule dans l'étape a est réglé au préalable à une température inférieure ou égale à 120°C, notamment inférieure ou égale à 100°C, en particulier inférieure ou égale à 90°C, préférentiellement comprise de 20°C à 90°C.

L'expression « moule réglé à une température... » a la même signification que le « moule est au préalable à une température... » et signifie que dans le cas d'une presse à injecter, la température du moule correspond à la température du fluide caloporteur circulant à l'intérieur du moule. Il s'agit alors dudit fluide caloporteur de la température de consigne. Il s'agit aussi de la température que l'opérateur (l'homme de l'art) choisi en réglant depuis le pupitre de sa machine (presse à injecter).

Dans le cas d'un moule de type « moule à compression » ou « moule à gaufre », elle correspond à la température de la paroi du moule en surface côté texturant.

Au moins un élément texturant (T) est par la suite, dans l'étape b, appliqué ou introduit sur ou contre la paroi du moule, ledit moule étant préférentiellement à la même température que celle définie pour l'étape a.

Dans le cas d'un moule à injecter, la paroi du moule est la paroi intérieure du moule, c'est-à-dire la paroi de la partie mobile du moule (par opposition à la paroi de la partie fixe du moule, là où est le point d'injection.

L'expression « élément texturant (T) » désigne tout matériau présentant au moins une surface au moins partiellement structurée mais aplatie et permettant de reproduire sa texture, c'est-à-dire son état ou sa propriété de surface et/ou de toucher, par exemple rugueux ou lisse).

La surface dudit élément texturant (T) peut être seulement partiellement structurée sur l'une et/ou l'autre de ses surfaces.

Préférentiellement, une des surfaces dudit élément texturant (T) est entièrement structurée.

Préférentiellement, les deux surfaces dudit élément texturant (T) sont au moins partiellement structurées.

Si l'élément texturant (T) n'est structuré que sur l'une de ses surfaces, alors la face en regard du moule, côté intérieur du moule est la face non structurée. Préférentiellement, les deux surfaces dudit élément texturant (T) sont entièrement structurées.

L'élément texturant (T) est peut-être d'origine animale ou végétale, par exemple il est choisi parmi du bois, un textile, du cuir, du papier, un végétal comme une feuille d'arbre.

Il est bien évident que l'élément structuré est suffisamment souple pour pouvoir épouser la forme du moule, notamment à la température du moule.

Dans le cas contraire, l'élément texturant (T) peut être préalablement thermoformé avant d'être disposée dans le moule.

Avantageusement, un seul élément texturant (T) est appliqué sur la paroi du moule (M).

Avantageusement, l'élément texturant (T) est en particulier sous forme plane, plus particulièrement de film d'épaisseur de 20 à 2000 µm, préférentiellement de 50µm à 1000 µm, en particulier de 50µm à 500 µm, présentant au moins partiellement une surface texturée.

Au-delà de 2000 µm, le film présente une épaisseur trop importante pour pouvoir épouser correctement la forme du moule.

L'étape c consiste à appliquer sur l'élément texturant (T), face opposée à celle en regard du moule et donc côté face structurée si l'élément texturant (T) n'en présente qu'une, un film (F) comprenant au moins une couche (1) comprenant une composition comprenant au moins un polyamide semi-cristallin (Psc) tel que défini ci-dessus.

L'expression « une composition comprenant au moins un polyamide semi-cristallin (Psc) » signifie que le polyamide semi-cristallin est majoritaire par rapport à la somme des polymères de ladite composition.

Ladite couche (1) est donc destinée à être en contact avec l'élément texturant, notamment avec la surface structurée de l'élément texturant (T) si l'élément texturant (T) n'en présente qu'une.

### S'agissant du film (F)

L'expression « application d'au moins un moyen de chauffe » signifie qu'en fonction de l'épaisseur du film, un ou plusieurs moyens de chauffe sont présents.

Ainsi, dans le cas d'un film (F) d'épaisseur comprise de 10 à 400µm, un seul moyen de chauffe peut être nécessaire, ledit moyen de chauffe consistant par exemple en l'injection d'un polymère fondu.

Dans le cas où le film (F) présente une épaisseur supérieure à 400µm, il est avantageux de préchauffer ledit film (F) et donc d'avoir un deuxième moyen de chauffe différent dudit moyen de chauffe.

Ledit deuxième moyen de chauffe est alors par exemple une rampe chauffante mobile, en particulier une rampe chauffante par Infra Rouge (IR) mobile pour préchauffer le film. Dans ce cas, avantageusement, une dépression d'au moins -700 mbars de vide relatif est appliqué audit film (F) par le biais d'un système de pompe à vide pour le plaquer ainsi que ledit texturant (T) contre la paroi du moule destinée à être en contact avec le texturant (T).

Le film (F) peut être monocouche (F1) ou multicouche (F2).

Le film (F) peut être préalablement décoré (avantageusement sur la face non exposée aux futures agressions) ce qui permettra d'obtenir in fine un film décoré visuellement et tactilement.

Dans le cas d'un film monocouche (F1), ledit film (F1) est constitué d'une couche (1) comprenant une composition (CPO) comprenant au moins un polyamide semi-cristallin (Psc), ladite couche (1) présentant une épaisseur d'au moins 10µm, en particulier comprise de 10 à 2000µm.

Il n'y a donc pas d'autre couche présente dans le film (F1), ladite couche (1) pouvant décorée ou non.

Avantageusement, ladite couche (1) est constituée de ladite composition (CPO).

Dans le cas d'un film multicouche, ledit film (F2) comprend au moins une couche (1) comprenant une composition comprenant au moins un polyamide semi-cristallin (Psc), ladite couche (1) présentant une épaisseur comprise de 20 à 1000 µm, en particulier de 50 à 200 µm.

Avantageusement, ladite couche (1) dudit film monocouche (F1) ou dudit film multicouche (F2) est constituée d'une composition comprenant au moins un polyamide semi-cristallin (Psc).

Ladite composition peut donc comprendre plusieurs polyamides semi-cristallins. Ladite composition de la couche (1) est alors majoritairement à base de ceux-ci, lesdits polyamides semi-cristallins (Psc) étant les constituants matriciels. Avantageusement, ladite composition comprend un seul polyamide semi-cristallin, ledit polyamide semi-cristallin (Psc) étant le constituant matriciel. Ladite composition de la couche (1) peut être un alliage, un mélange, un composite.

Elle peut comprendre des additifs classiquement utilisés par l'homme du métier, notamment des plastifiants, des stabilisants, des colorants, des charges minérales, et d'autres polymères miscibles, compatibles ou compatibilisés par un composant tiers.

La composition (CPO), et optionnellement ledit au moins un polyamide semi-cristallin (Psc)), présente une enthalpie de fusion comprise de comprise de 25J/g à 75J/g (1ère chauffe de DSC selon ISO 11357- :2013 à 40°C/mn).

De préférence la composition (CPO) (et optionnellement ledit au moins un polyamide semi- cristallin (Psc)) est telle que sa Tg (température de transition vitreuse) est comprise de 30 à 120°C, de préférence de 60°C à 90°C, et que sa Tm (température de fusion) est comprise de 150°C à 330°C, de préférence de 150 à 200°C.

Avantageusement ledit au moins un polyamide (Psc) résulte de l'enchainement de monomères tels que 50% ou plus, en poids, de ces monomères ont un nombre d'atomes de carbone supérieur ou égal à 9, avantageusement, le nombre d'atomes de carbone des monomères est compris de 9 à 36, préférentiellement 9 à C18, plus préférentiellement de 9 à 12 Avantageusement, le polyamide semi-cristallin (Psc) est choisi parmi le PA 12 et le PA 11, en particulier le PA 11.

Par polyamide semi-cristallin (Psc) on entend aussi des copolyamides.

Si le film est multicouche, alors la couche qui est en contact avec la surface structurée de l'élément (T) est la couche (1) définie ci-dessus.

L'épaisseur de la couche (1) du film monocouche (F1) ou du film multicouche (F2) est supérieure ou égale à 10 µm.

Avantageusement, elle est comprise de 10 à 1000 µm, notamment de 100 à 1000 µm.

Plus préférentiellement, elle est comprise de 10 à moins de 500 µm, notamment de 10 µm à moins de 200 µm.

L'étape d du procédé ci-dessus défini, consiste à appliquer un moyen de chauffe (H) sur la face opposée à celle en contact avec l'élément (T) dudit film (F) de l'étape c, de manière à ce que la couche (1), qui est destinée à être en contact avec l'élément texturant (T), soit à une température (TT) du côté du film face au texturant (T), comprise de 60°C à une température Tm - 15°C, Tm étant la température de fusion de la composition (CPO), composition qui comprend ledit polyamide semi-cristallin (Psc).

TT correspond à la température en surface du film (côté du film face au texturant (T)).

Avantageusement, Tg < TT < Tm - 30°C.

Plus avantageusement, Tg < TT < Tm - 50°C.

Dans une autre variante, Tg + 10°C < TT < Tm - 15°C, avantageusement, Tg + 10°C < TT < Tm - 30°C, plus avantageusement Tg + 10°C < TT < Tm - 50°C.

Dans encore une autre variante, Tg + 20°C < TT < Tm - 15°C, avantageusement, Tg + 20°C < TT < Tm - 30°C, plus avantageusement Tg + 20°C < TT < Tm - 50°C.

Avantageusement, ladite couche (1) est à une température (TT) comprise de 60°C à 150°C, préférentiellement de 60°C à 100°C.

La température de la couche (1) dudit film (F) destinée à être contact avec l'élément texturant (T) peut être mesurée par des techniques classiques pour l'homme du métier.

La mesure de la température (TT) peut s'effectuer par exemple avec un capteur dans le fond du moule qui affleure permettant d'obtenir la température sans la présence de l'élément texturant (T).

L'étape d consiste aussi en l'application d'un moyen de pression (P) sur ledit film (F) avec une pression comprise de 1,5 à 2000 bars, en particulier de 5 à 1000 bars.

Avantageusement, la pression (P) est de 5 bars à 500 bars, durant un temps t compris de 0,1s à 5h, préférentiellement de 1s à 1h min, plus préférentiellement de 1s à 10 min, notamment de 3s à 10 min, en particulier de 3s à 2 min. L'application du moyen de pression (P) se fait simultanément ou après à l'application du moyen de chauffe (H).

Le temps t durant lequel le moyen de chauffe (H) et le moyen de pression (P) sont appliqués sur le film (F) est compris de 0,1s à 5h, préférentiellement de 3s à 10 min.

L'application dudit moyen de chauffe et dudit moyen de pression permet de mettre en contact la couche (1) dudit film (F) avec ledit élément texturant (T), ce qui permet de faire pénétrer ledit élément texturant (T) suffisamment dans la couche (1) pour que la composition CPO puisse prendre l'empreinte de l'élément texturant (T) mais pas au point de faire fondre la composition CPO et ainsi de trop coller sur l'élément texturant (T).

Après démoulage, l'objet comprenant ledit film (F) de polyamide semi-cristallin (Psc) et présentant, en tout ou partie de la surface extérieure et/ou intérieure de ladite couche (1), la reproduction de la texture de l'élément texturant (T) est obtenue à l'étape e.

Après démoulage, ledit film (F) est dépourvu de l'élément texturant (T) car celui-ci n'adhère pas et/ou se détache facilement.

La reproduction de la texture de l'élément texturant (T) se fait partiellement sur la surface du film (F) qui a été en contact avec l'élément texturant si la surface dudit élément texturant (T) est seulement partiellement structurée.

Elle se fait sur toute la surface du film (F) si la surface dudit élément texturant (T) est totalement ou entièrement structurée.

Avantageusement, la surface dudit élément texturant (T) est totalement ou entièrement structurée et la reproduction de la texture de l'élément texturant (T) se fait sur toute la surface du film monocouche (F).

Dans un mode de réalisation avantageux, ladite température de la couche (1) dudit film comprenant la composition (CPO) destinée à être en contact avec ledit élément texturant (T), est à une température (TT) telle que définie ci-dessus, sur une épaisseur d'au moins 10µm.

TT correspond alors à la température non plus en surface du film (côté du film face au texturant (T)), mais sur une épaisseur (ou profondeur) d'au moins 10µm.

Avantageusement, la température de la couche (1) dudit film comprenant la composition CPO destinée à être en contact avec ledit élément texturant (T), est à une température (TT) telle que définie ci-dessus, sur une épaisseur comprise de 10 à moins de 500 µm, notamment de 10 µm à moins de 200 µm. Avantageusement, la température de la couche (1) dudit film comprenant la composition (CPO) côté opposé à la surface destinée à être en contact avec ledit élément texturant (T), est supérieure ou égale à Tm de (CPO) - 25°C, sur 20% de l'épaisseur de la dite couche (1).

Le moyen de chauffe et de pression de l'étape d peut être tout moyen de chauffe et de pression connu de l'homme du métier, telle qu'une rampe infrarouge ou microonde.

Avantageusement, ledit moyen de chauffe (H) et de pression (P) consiste en l'injection d'un polymère fondu (I) à une température Tinj comprise de 150°C à 350°C sur la face opposée à celle destinée à être en contact avec l'élément texturant (T) dudit film (F) de l'étape (c), durant un temps t compris de 0,1s à 15mn, préférentiellement de 1s à 15mn, plus préférentiellement de 1s à 10min, notamment de 3s à 10min, en particulier de 3s à 2min et la pression étant comprise de 1,5 à 2000 bars, en particulier de 5 bars à 1000 bars, plus avantageusement de 50 bars à 500 bars.

Le polymère fondu constitue donc à la fois le moyen de chauffe et de pression. L'injection du polymère fondu (I) en tant que moyen de chauffe permet donc de porter la face du film (F) qui est en contact avec ledit polymère fondu à une température (TI) et par diffusion de la chaleur au travers dudit film (F) de porter la face du film (F) qui est en contact avec l'élément structurant (T) à une température TT, inférieure par conséquent à TI.

Dans le cas d'une presse à injecter, le polymère fondu (I) est injecté dans le moule (sur le film (F)) à un débit préférentiellement compris de 10 à 1000 cm³/s. Dans une première variante, lorsque ledit moyen de chauffe et de pression consiste en l'injection d'un polymère fondu (I), ledit polymère fondu (I) adhère sur ladite couche (1).

Avantageusement, dans cette première variante, le film comprenant la composition (CPO) est un film monocouche (F1) d'épaisseur telle que définie ci-dessus.

Dans le cas d'un film monocouche (F1), en fonction de l'épaisseur du film, la reproduction de l'élément texturant (T) peut également se faire sur la surface intérieure de ladite couche (1) du film monocouche (F1).

L'application dudit moyen de chauffe et dudit moyen de pression par l'injection d'un polymère fondu (I) permet de mettre en contact la couche (1) dudit film monocouche (F1) avec ledit élément texturant (T), ce qui permet de faire pénétrer ledit élément texturant (T) suffisamment dans la couche (1) dudit film monocouche pour que ce film (F1) (comprenant la composition (CPO)) puisse prendre l'empreinte de l'élément texturant (T) mais pas au point de faire fondre la composition (CPO) et ainsi de trop coller sur l'élément texturant (T).

Dans le même temps, le polymère (I) adhère suffisamment sur ladite couche (1) dudit film (F1) mais la température à l'état fondu de (I) n'est pas trop élevée de manière à ne pas faire fondre ou à faire fondre partiellement le film de telle sorte qu'il ne soit pas trop abimé ni déformé.

Avantageusement, la température à l'état fondu de (I) Tinj est comprise de Tm + 20°C et Tm + 100°C.

Dans un mode de réalisation, l'épaisseur dudit film monocouche (F1) est comprise de 100 µm à 1000 µm, en particulier de 10 à moins de 500 µm, notamment de 10 µm à moins de 200 µm.

Avantageusement, la température de la couche (1) dudit film monocouche (F1) comprenant la composition (CPO) destinée à être en contact avec ledit élément texturant (T), est à une température (TT) telle que définie ci-dessus, sur une épaisseur comprise de 10 à moins de 500 µm, notamment de 10 µm à moins de 200 µm.

Avantageusement, la température de la couche (1) dudit film comprenant la composition (CPO) côté opposé à la surface destinée à être en contact avec ledit élément texturant (T), est supérieure ou égale à Tm - 25°C, sur 20% de l'épaisseur de la dite couche (1) dudit film monocouche (F1).

Le polymère (I) à l'état fondu peut être n'importe quel polymère thermoplastique à partir du moment où il est susceptible d'être à l'état fondu entre 150°C et 350°C.

Avantageusement, la température du polymère (I) à l'état fondu est comprise de 200°C à 280°C et le polymère est un polymère adhérant la couche (1) dudit film (F1), en particulier c'est une composition de polyamide à base de plus de 50% de polyamide avec un nombre de carbones supérieur ou égal à 9.

Dans un mode de réalisation, le polymère à l'état fondu (I) est choisi parmi des compositions à base de polymères comme les poly ether block amides (PEBA), les thermoplastiques polyuréthanes (TPU), les polyéthylènes (PE), les polypropylènes (PP), les acrylonitrile butadiène styrènes (ABS), les polycarbonates (PC), les PA610, 612, 11, 12, les PA en C9 et les copolyamides, les alliages de PA, les polyphtalamides, les PA amorphes transparents, les poly(méthacrylate de méthyle) (PMMA), de telle sorte à obtenir une bonne adhésion entre le polymère à l'état fondu et la couche (1) du film (F1).

Avantageusement, le polymère (I) est un polyamide, notamment un polyamide aliphatique et notamment choisi parmi le PA11, le PA12, le PA1012, le PA1010, le PA612 et le PA610, en particulier parmi le PA11 et le PA12, notamment le polymère (I) est un PA11.

Selon la présente demande, le terme "polyamide", également noté PA, à l'exclusion de la définition du polyamide semi-cristallin (Psc) de la couche (1) du film (F) vise :
- les homopolymères (ou homopolyamides),
- les copolymères, ou copolyamides, à base de différents motifs amide,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-612 où les motifs polyamide sont les mêmes que ceux du PA612.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Dans une seconde variante, lorsque ledit moyen de chauffe et de pression consiste en l'injection d'un polymère fondu (I), ledit polymère fondu (I) est dépourvu d'adhésion sur ledit polyamide semi-cristallin (Psc). Avantageusement, dans cette seconde variante, ledit film de polyamide semi-cristallin (Psc) est un film multicouche (F2) comprenant au moins une couche (1) d'épaisseur comprise de 20µm à 1000µm, en particulier de 50µm à moins de 200µm et au moins une couche (2) susceptible d'adhérer avec le polymère fondu (I).

Avantageusement, le polymère (I) est un polyamide, notamment un polyamide aliphatique et notamment choisi parmi le PA11, le PA12, le PA1012, le PA1010, le PA612 et le PA610, en particulier parmi le PA11 et le PA12, notamment le polymère (I) est le PA11.

Donc dans cette seconde variante, il existe un premier mode de réalisation caractérisé en ce que ledit film multicouche (F2) comprend au moins deux couches, une couche (1) et une couche (2), les deux couches (1) et (2) adhérant l'une à l'autre, et la couche en contact avec l'élément texturant (T) étant la couche (1) comprenant la composition comprenant ledit polyamide semi-cristallin (Psc).

Dans ce cas, la couche (2) peut comprendre une composition comprenant un polyamide, notamment aliphatique, en particulier un copolyamide, notamment PA11/6 qui adhère sur la couche (1).

Il est bien évident que les couches (1) et (2) ne sont pas identiques.

Le polymère (I) à l'état fondu peut être n'importe quel polymère thermoplastique à partir du moment où il est susceptible d'être à l'état fondu entre 150°C et 350°C.

Avantageusement, la température du polymère à l'état fondu est comprise de 200°C à 280°C et le polymère est un polymère adhérant la couche (1) dudit film (F1), en particulier c'est une composition de polyamide à base de plus de 50% de polyamide avec un nombre de carbones supérieur ou égal à 9.

Dans un mode de réalisation, le polymère à l'état fondu est choisi parmi les poly ether block amides (PEBA), les thermoplastiques polyuréthanes (TPU), les polyéthylènes (PE), les polypropylènes (PP), les acrylonitrile butadiène styrènes (ABS), les polycarbonates (PC), les PA610, 612, 11, 12, les PA en C9 et les copolyamides, les alliages de PA, les polyphtalamides, les PA amorphes transparents, les poly(méthacrylate de méthyle) (PMMA), de telle sorte à obtenir une bonne adhésion entre le polymère à l'état fondu et la couche (2) du film (F2).

Avantageusement, la couche (2) est constituée d'une composition comprenant un polyamide, notamment aliphatique, en particulier un copolyamide, notamment PA11/6 qui adhère sur la couche (1).

Ladite composition peut être comme pour la couche (1) un alliage, un mélange, un composite.

Elle peut comprendre des additifs classiquement utilisés par l'homme du métier, notamment des plastifiants, des stabilisants, des colorants, des charges minérales, et d'autres polymères miscibles, compatibles ou compatibilisés par un composant tiers.

Avantageusement, ledit polymère fondu (I) ci-dessus défini adhère sur la couche (2), ladite couche (2) étant située côté opposé à la couche (1) qui est contact avec l'élément texturant (T).

Avantageusement, ledit polymère fondu (I) ci-dessus défini adhérant sur la couche (2) est un polyamide, en particulier aliphatique, notamment un présentant un nombre moyen d'atomes de carbone par atome d'azote compris de 5 à 7.

L'application dudit moyen de chauffe et dudit moyen de pression par l'injection d'un polymère fondu (I) permet de mettre en contact la couche (1) dudit film multicouche (F2) avec ledit élément texturant (T), ce qui permet de faire pénétrer ledit élément texturant (T) suffisamment dans la couche (1) dudit film multicouche pour qu'il puisse prendre l'empreinte de l'élément texturant (T) mais pas au point de faire fondre la composition (CPO) et ainsi de trop coller sur l'élément texturant (T).

Dans le même temps, le polymère (I) adhère suffisamment sur la couche (2) dudit film (F2) mais la température à l'état fondu de (I) n'est cependant pas trop élevée de manière à ne pas trop déformer par fluage la couche (2) dudit film (F2).

Dans cette seconde variante, il existe un deuxième mode de réalisation caractérisé en ce que ledit film multicouche (F2) comprend au moins deux couches (1) et (2), la couche en contact avec l'élément texturant (T) étant la couche (1) comprenant la composition (CPO), les deux couches (1) et (2) étant dépourvues d'adhésion l'une à l'autre et comprenant au moins un troisième couche (3) entre elles permettant l'adhésion entre les couches (1) et (2).

La couche (3) peut être une composition adhésive, notamment une composition à base d'au moins un polyamide et en particulier la composition suivante:
- au moins un polyamide noté A présentant un nombre moyen d'atomes de carbone par atome d'azote noté CA compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté CB compris entre 7 et 10, avantageusement entre 7,5 et 9,5;
- au moins un polyamide noté C présentant un nombre moyen d'atomes de carbone par atome d'azote noté CC compris entre 9 et 18, avantageusement entre 10 et 18 ;

au moins 50% en poids de ladite composition étant formés d'un ou de plusieurs polyamides choisis parmi les polyamides A, B et C,
la moyenne pondérée massique des enthalpies de fusion de ces polyamides au sein de ladite composition étant supérieure à 25J/g (DSC),
le nombre moyen d'atomes de carbone par atome d'azote des polyamides A, B et C répondant en outre à l'inéquation stricte suivante : CA < CB < CC. Avantageusement, ledit polymère fondu (I) ci-dessus défini adhère sur la couche (2), ladite couche (2) étant située côté opposé à la couche (3) qui est contact avec la couche (1) en contact avec l'élément texturant (T).

Ladite couche (2) est donc en contact avec la couche (3) qui permet l'adhésion de la couche (1) et de la couche (2).

L'application dudit moyen de chauffe et dudit moyen de pression par l'injection d'un polymère fondu (I) permet de mettre en contact la couche (1) dudit film multicouche (F2) avec ledit élément texturant (T), ce qui permet de faire pénétrer ledit élément texturant (T) suffisamment dans la couche (1) dudit film multicouche pour qu'il puisse prendre l'empreinte de l'élément texturant (T) mais pas au point de faire fondre la composition (CPO) à base de polyamide (Psc) et ainsi de trop coller sur l'élément texturant (T).

Dans le même temps, le polymère (I) adhère suffisamment sur la couche (2) dudit film (F2) mais la température à l'état fondu de (I) n'est pas trop élevée de manière à ne pas déformer par fluage la couche (2) dudit film (F2). Avantageusement, ledit polymère fondu (I) ci-dessus défini adhérant sur la couche (2) est un polyamide, en particulier aliphatique, notamment présentant un nombre moyen d'atomes de carbone par atome d'azote compris de 5 à 7. Dans un mode de réalisation, la couche (1) destinée à être en contact avec ledit élément texturant (T), durant l'étape d, est à une température (TT) de la composition de la couche (1), et de préférence entre la Tg et la Tm -15°C dudit polyamide semi-cristallin (Psc))sur une épaisseur comprise de 5 à 50% dudit film, du coté en regard du texturant (T), la Tg étant déterminée selon ISO 11357-2 :2013 et la Tm selon ISO 11357-3 :2013.

En dessous de 5% d'épaisseur, la couche (1) dudit film n'est pas à une température suffisante pour pouvoir reproduire la surface structurante de l'élément texturant (T).

Au-dessus de 50% d'épaisseur, la température dudit film sera trop basse sur une épaisseur trop importante pour une bonne adhésion entre la couche (1) et le polymère fondu (I) du film monocouche (F1) ou la couche (1) et (2) du film multicouche (F2) ou les couches (1), (3) et (2) du film multicouche (F2) ou encore entre la couche (2) et le polymère fondu (I) du film multicouche (F2). Avantageusement, la composition de la couche (1) présente une transparence telle que la transmittance à 560 nm sur plaque de 1 mm d'épaisseur est supérieure ou égale à 80% déterminée selon la norme ISO 13468-2:2006, en particulier supérieure ou égale à 88%.

Avantageusement, la composition de la couche (1) et optionnellement aussi ledit polyamide semi-cristallin (Psc) présente(nt) une enthalpie de fusion comprise de 30 à 50J/g (1ère chauffe de DSC selon ISO 11357-3 :2013 à 40°C/mn).

Avantageusement, la composition de la couche (1) présente une transparence telle que la transmittance à 560 nm sur plaque de 1 mm d'épaisseur est supérieure ou égale à 80% déterminée selon la norme ISO 13468-2:2006, en particulier supérieure ou égale à 88% et l'enthalpie de fusion est comprise de 30 à 50J/g (1ère chauffe de DSC selon ISO 11357-3 :2013 à 40°C/mn).

Dans un mode de réalisation, la composition (CPO) (et optionnellement ledit au moins un polyamide semi- cristallin (Psc)) est telle que sa température de transition vitreuse (Tg) est comprise de 30 à 120°C, de préférence de 60°C à 90°C déterminée selon, ISO 11357-2 :2013, et sa température de fusion (Tm) est comprise de 150°C à 330°C, de préférence de 150°C à 200°C, déterminée selon ISO 11357-3 :2013.

Avantageusement, la couche (1) dudit film monocouche (F1) ou multicouche (F2) est constituée d'une composition transparente comprenant en poids, le total étant 100%:
- 5 à 40% d'un polyamide amorphe (B) qui résulte essentiellement de la condensation:
- soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
- soit d'un acide alpha omega amino carboxylique cycloaliphatique,
- soit d'une combinaison de ces deux possibilités,
   et éventuellement d'au moins un monomère choisi parmi les acides alpha omega amino carboxyliques ou les éventuels lactames correspondants, les diacides aliphatiques et les diamines aliphatiques,
- 0 à 40% d'un polyamide souple (C) choisi parmi les copolymères à blocs polyamides et blocs polyether et les copolyamides,
- 0 à 20% d'un compatibilisant (D) de (Psc) et (B),
- 0 à 40% d'un modifiant souple (MS),
- 0 à 20% d'un additif (A),
   avec la condition que (C)+(D)+(MS) est compris entre 0 et 50%,
- le complément à 100% d'un polyamide (Psc) semi cristallin, le polyamide (Psc) étant majoritaire par rapport à la somme (Psc) + (B) + (C) + (D). Avantageusement, la couche (1) dudit film monocouche (F1) ou multicouche (F2) est constituée d'une composition transparente comprenant en poids, le total étant 100%:
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :
- les acides alpha omega amino carboxyliques,
- les diacides aliphatiques,
- les diamines aliphatiques,
- 0 à 40% d'un polyamide souple (C) choisi parmi les copolymères à blocs polyamides et blocs polyether et les copolyamides,
- 0 à 20% d'un compatibilisant (D) de (Psc) et (B),
- 0 à 20% d'un additif (A),
   (C)+(D) est compris entre 0 et 50%
   avec la condition que (B)+(C)+(D) n'est pas inférieur à 30%,
- le complément à 100% d'un polyamide (Psc) semi cristallin, le polyamide (Psc) étant majoritaire par rapport à la somme (Psc) + (B) + (C) + (D).

Avantageusement, le polyamide (Psc) est choisi parmi le PA11, le PA12, le PA1012, le PA1010, le PA612 et le PA610, en particulier parmi le PA11 et le PA12, notamment le polyamide (Psc) est le PA11.

Dans un autre mode de réalisation, un deuxième élément texturant (T'), différent du premier est présent entre le premier élément texturant (T) et le moule, ledit deuxième élément texturant (T') recouvrant au moins partiellement ledit premier élément texturant (T).

Il peut s'agir par exemple d'un logo d'une entreprise qui fabrique ledit objet tel que défini ci-dessus. Dans ce cas, il est bien évident que le deuxième élément texturant (T') ne recouvre que partiellement ledit premier élément texturant (T). Dans un mode de réalisation, optionnellement, ledit objet obtenu à l'étape e., tel que défini ci-dessus, revêt par sa face non texturée, un substrat structurel.

Le terme « revêt » signifie également « couvre », « habille », « recouvre », « tapisse » ou garnit.

Selon un autre aspect, la présente invention concerne un objet obtenu selon le procédé tel que ci-dessus défini.

Selon un autre aspect, la présente invention concerne une pièce comprenant au moins un objet tel que ci-dessus défini.

La pièce peut-être un intérieur automobile (porte, console...). Elle peut être également une pièce "planche de bois" qui est une planche de bois (ou autre) recouvert d'un film tel que défini ci-dessus avec une image bois (décoration par sublimation ou sérigraphie) et un toucher bois (au moyen d'un texturant type bois à l'état tiède), tout en présentant l'endurance d'un polyamide tel que le PA11, en un mot du bois avec ses avantages et sans ses défauts.

### Brève description des figures

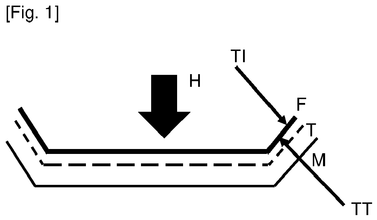

[Fig. 1] décrit un schéma général du procédé de l'invention avec le moule (M), l'agent texturant (T), le film (F), le moyen de pression (H) et les températures (TI) et (TT), (TI) étant la température à la surface du film côté opposé à celui qui sera texturé, (TT) étant défini préalablement.

### EXEMPLES

### Exemple 1 : procédé général représentatif avec un film monocouche

### Exemple 1-a : texturant tissu

Une presse à injecter de 350 tonnes est utilisée, les températures de la vis d'injection étant réglées à 250°C sur la dernière zone de chauffe de la visse. Un polyamide PA12 de viscosité inhérente 1,0, mesurée dans le m-crésol selon la norme ISO 307 :2007 mais en utilisant du m-crésol à la place de l'acide sulfurique, une température de 20°C et une concentration de 0,5% massique, est injecté dans un moule (M) correspondant à un panneau intérieur de porte arrière de voiture.

### Etape (a) :

Le moule est au préalable réglé à 60°C.

Comme tous les moules d'injection, ce moule est constitué de 2 parties :
La partie fixe, partie proche de la vis d'injection, qui est aussi la partie où se trouvent le (ou les) point(s) d'injection,
La partie mobile du moule, partie qui permet d'ouvrir le moule, cette partie est la plus éloignée de la vis d'injection.

Cette partie est typiquement celle qui permet de mouler la face avant de la pièce (qui sera visible : panneau intérieur de voiture). Cette partie du moule est celle qui concerne le moule (M).

### Etape (b) :

Au lieu d'injecter tout de suite le polymère dans le moule comme lors d'un classique cycle d'injection, un texturant (T) qui est morceau de tissu de forme plane et possède une épaisseur d'environ 0,5mm est placé au fond du moule (M) (dans sa partie mobile donc). Le tissu est découpé de façon à ce qu'il puisse tapisser toute la surface de la partie mobile du moule (M).

### Etape (c) :

Un film (ou feuille) (F) monocouche comprenant une composition CPO de 150µm d'épaisseur, cette composition étant constituée de:
65% en poids de PA12 Mw 45000 à 55000,
25% en poids d'un CoPA IPD.10/12 (rapport massique : 80/20),
10% de PA 11 de Mw 45000 à 55000 et contenant 0,3% d'acide phosphorique, est placé dans le moule et par-dessus le tissu (texturant T).

Le film a été préalablement obtenu par mise en oeuvre sur une ligne classique de calandrage de film composée d'une extrudeuse chauffée à 240°C, le polymère fondu en sortie d'extrudeuse étant mis en forme de film par l'action des rouleaux de calandrage chauffés à 40°C.

Le film est également découpé pour qu'il déborde de quelques mm sur le plan de joint de façon à ce qu'il puisse, ultérieurement dans le processus d'injection, au moins recouvrir l'intégralité de la surface du moule.

### Etape (d) :

Le moule est ensuite refermé et le PA12 de viscosité inhérente 1,0 est injecté dans le moule à un débit de 385 cm³/s et la vis d'injection est réglée à une température plafond de 250°C. Une fois le moule rempli, la pression est appliquée et maintenue durant un temps de 10 s, cette pression est de 250 bars. Cette pression va plaquer le film (F) sur le texturant (T), les deux étant plaqués sur le fond du moule (M). Le film (F) et le texturant (T) épousent la forme du moule et le film (F) épouse et reproduit la texture du texturant (T).

Ensuite le moule est laissé refroidir, avec un temps de refroidissement de 40 s, ce qui clôt l'étape (d).

### Etape (e) :

Après refroidissement, le moule est ouvert.

L'objet « panneau intérieur de porte arrière de voiture », que l'on récupère est constituée du PA12 (maintenant à l'état solide d'épaisseur 1,5 mm) recouvert du film (F). Le film (F) est solidaire de la partie en PA12 car l'adhésion entre elles est bonne.

Le texturant (T) n'adhère pas sur le film (F), il tombe de lui-même ou est facilement manuellement retiré. Le texturant T a laissé son empreinte sur la face visible (face externe) du film F, de ce fait il reproduit son aspect et tout particulièrement son toucher, ce qui confère à l'objet « panneau intérieur de porte arrière de voiture », un aspect qui n'est plus du tout celui d'un typique objet en plastique, mais celui d'un objet de grande qualité semblant tapissé ou recouvert d'un véritable textile.

### Exemple 1-b :

Une variante de l'exemple 1 consiste en la décoration visuelle préalable du film (F), (après sa production par calandrage et avant de le placer dans le moule de la presse à injection), par une technique de sublimation ou de sérigraphie consistant à transférer une image, un décor visuel, sur la face du film (F) qui sera de préférence la face opposée à la face destinée à être texturée. L'image peut-être celle qui correspond à une photographie du tissu qui constitue le texturant (T).

### 1-b-1 :

Le texturant peut-être par exemple un tissu de textile imprimé coloré. On aura ainsi non seulement reproduit sur l'objet le toucher du texturant mais également son aspect visuel du fait que le film (F) était préalablement décoré (visuellement) d'une image de ce tissue. On aura donc reproduit l'aspect visio-tactile du texturant tissu. On aura donc une sensation haptique plus complète.

L'avantage par rapport à un vrai tissu est l'endurance du film (F), bien supérieur physiquement et chimique à celle d'un tissu (textile).

### 1-b-2 :

On peut aussi avoir une décoration visuelle de bois sur le film et pour ce faire on utilise un texturant qui est une fine feuille de bois.

Le résultat est un objet qui ressemble et visuellement et tactilement à du bois.

### Exemple 1-c

Pour plus d'endurance encore, nous pouvons considérer l'exemple d'un film de 600 µm au lieu de 150µm. Cette épaisseur peut rendre plus difficile d'épouser la forme du moule. Pour mieux lui faire épouser la forme du moule le film épais peut être préalablement façonné de façon à grossièrement pré-épouser la forme du moule. Pour ce faire après avoir placé et fixé le texturant (T) et le film (F), c'est-à-dire après l'étape (c) et avant de refermer le moule pour injecter le PA12, une étape qui consiste à amener une rampe chauffante infra-rouge pour chauffer le film (F) au-dessus de sa Tg, c'est-à-dire 100°C (mesurée par un thermomètre infra-rouge) pendant au moins 3s est effectuée puis à l'aide d'une pompe à vide une dépression est appliquée en fond de moule de façon à aspirer le film (F) ramolli sur le fond du moule, au moins de façon grossière ou partielle.

Le processus reprend alors son cours, le moule est fermé, le PA12 fondu est injecté et il pourra terminer du pousser le film au fond du moule pour qu'il l'épouse parfaitement, et comme déjà décrit, dans la foulée, il épousera le texturant (T) et reproduira sa texture.

### Exemple 1-d ;

Texturant :papier buvard.

L'exemple 1-a est reproduit en utilisant un texturant papier buvard d'épaisseur 0,3mm.

### Exemple 1-e

### Texturant : Végétal comme une feuille d'arbre

L'exemple 1-a est reproduit en utilisant un texturant feuille d'arbre d'épaisseur d'environ 6mm dans les parties les plus épaisses.

### Exemple 1-f

### 2 Texturants : Végétal comme une feuille d'arbre sur buvard

L'exemple 1-a est reproduit en utilisant un texturant feuille d'arbre de l'exemple 1e avec un deuxième texturant papier buvard.

La feuille d'arbre (texturant n°1) se trouve au-dessus du buvard (texturant n°2), la feuille d'arbre étant placé du côté du film. On obtient ainsi la reproduction de la feuille d'arbre sur un fond de toucher buvard.

### Exemple 2 : procédé général représentatif avec film multicouche comprenant une couche (1) et une couche (2)

### Exemple 2-a : couche (1) et couche (2) adhérentes

L'exemple 1-a est reproduit à la différence qu'en étape (c), un film (F) multicouche comprenant une couche (1) comprenant une composition CPO telle que définie dans l'exemple 1, mais de 50µm d'épaisseur et une couche (2) constituée de polyamide PA12 pur et d'épaisseur 100µm est placé dans le moule et par-dessus le tissu (texturant T), la couche (1) étant en contact avec le texturant T.

Les étapes (d) et (e) sont identiques à celle de l'exemple 1-a.

### Exemple 2-a : couche (1) et couche (2) non adhérentes

L'exemple 1-a est reproduit à la différence qu'en étape (c), un film (F) multicouche comprenant une couche (1) comprenant une composition CPO telle que définie dans l'exemple 1, mais de 50µm d'épaisseur et une couche de liant constituée d'un PE greffé à 0,6% d'anhydride maléique (densité 0,96 g/cm³, un MFI, Melt Flow Index qui est l'indice de fluidité à l'état fondu, mesuré selon la norme ASTM 1238, à 190°C sous 2,16 kg de 2) et d'épaisseur 100µm est placée dans le moule et par-dessus le tissu (texturant T), la couche (1) étant en contact avec le texturant T.

A l'étape (d), un HDPE de densité 0,96, de MFI mesuré selon la norme ASTM 1238, à 190°C sous 2,16 kg de 2, est injecté à l'état fondu dans les mêmes conditions que le PA12 de l'exemple 1a (étape d).

### Exemple 3 : Moule de compression

Un moule de compression de deux plateaux plans chauffables est utilisé. La température des plateaux est réglée à 150°C. Le texturant et le film de l'exemple 1a sont repris. Le texturant est placé sur le film et sont tous les deux placés entre les deux plateaux qui sont alors placés sous une pression de 50 bars pendant 1 minute. Lorsque le film est suffisamment froid pour qu'il puisse être manipulé, le texturant est retiré sans effort. L'empreinte du textile sur le film est alors retrouvée ainsi qu'un toucher qui apparait semblable à celui du texturant.

### Contre exemple 1 : Structure visio tactile tissu

L'homme du métier a essayé de reproduire la structure visio tactile tissu de la page 24 de WO 2006/008358 A1.

Les seules informations données sont la température (110°C), la pression (20 bars) et le temps (5 min).

L'épaisseur du texturant n'est pas donnée.

La composition du polyamide n'est pas donnée.

L'épaisseur du film n'est pas donnée.

L'homme du métier n'a pas été en mesure avec les données fournies pour les différents paramètres du procédé décrits dans cet exemple d'obtenir un objet tel que revendiqué dans WO 2006/008358 A1.

### Contre exemple 2 :

L'exemple 3 de l'invention est reproduit sauf que la température des plateaux est réglée sur 30°C. L'empreinte du textile ne peut alors être reproduite et le toucher du film est quasi inchangé.

### Contre exemple 3 :

L'exemple 3 de l'invention est reproduit sauf que la température des plateaux est réglée sur 250°C. Le textile colle sur le film et il n'est pas possible de le détacher correctement du film.

### Contre exemple 4 :

L'exemple 1a de l'invention est reproduit sauf que le moule est réglé à 20°C (étape a) et que dans l'étape d, la pression n'est maintenue que pendant 2 secondes.

Le résultat est alors négatif, l'empreinte du textile ne peut alors être reproduite et le toucher du film est quasi inchangé.

## Revendications

1. Procédé de préparation d'un objet comprenant au moins un film (F) comprenant au moins une couche (1) comprenant une composition comprenant au moins un polyamide semi-cristallin (Psc) présentant une enthalpie de fusion comprise de 25J/g à 75J/g lors de la 1ère chauffe de DSC selon ISO 11357-3:2013 à 40°C/mn, ledit film présentant sur tout ou partie d'au moins une de ses surfaces la texture d'un élément texturant (T),
**caractérisé en ce qu'**il comprend les étapes suivantes :
a. Fourniture d'un moule (M) réglé à une température inférieure ou égale à 120°C, en particulier comprise de 20°C à 90°C,
b. Application sur la paroi du moule, d'au moins un élément texturant (T), de préférence d'épaisseur de 20 à 2000 µm, préférentiellement de 50µm à 1000 µm, en particulier de 50µm à 500 µm, en particulier sous forme plane, et présentant au moins partiellement une surface texturée, ladite surface texturée étant sur la face opposée à celle en regard du moule,
c. Application sur la surface texturée dudit élément texturant (T), d'au moins un film (F) comprenant au moins une couche (1) comprenant une composition (CPO) comprenant au moins un polyamide semi-cristallin (Psc), ladite couche (1) étant destinée à être en contact avec la surface texturée de l'élément texturant (T), l'épaisseur de ladite couche (1) étant d'au moins 10µm, en particulier comprise de 10 à 1000µm,
d. Application d'au moins un moyen de chauffe (H) sur ledit film de l'étape (c), pour arriver à une température (TT) du côté du film face au texturant (T), comprise de Tg à la température de fusion (Tm) de la composition (CPO) moins 15°C, la Tm étant mesurée selon ISO 11357-3 :2013, et application d'un moyen de pression (P) sur ledit film pour le mettre en contact avec l'élément texturant (T), avec une pression comprise de 1,5 à 2000 bars, en particulier de 5 bars à 1000 bars, durant un temps t compris de 0,1s à 5h, préférentiellement de 3s à 10 min,
e. Démoulage et obtention de l'objet comprenant ledit film comprenant la composition (CPO) comprenant au moins polyamide semi-cristallin (Psc) et présentant sur tout ou partie d'au moins une de ses surfaces la texture dudit élément texturant (T).

2. Procédé selon la revendication 1, **caractérisé en ce que** ladite température (TT) dudit film (F) comprenant la composition (CPO), est comprise de Tg à Tm - 15°C, sur une épaisseur d'au moins 10µm.

3. Procédé selon l'une des revendications 1 ou 2, **caractérisé en ce que** ledit moyen de chauffe (H) et de pression (P) consiste en l'injection d'un polymère fondu (I) à une température Tinj comprise de 150°C à 350°C sur la face opposée à celle destinée à être en contact avec l'élément texturant (T) dudit film (F) de l'étape (c), durant un temps t compris de 0,1s à 15mn, préférentiellement de 1s à 15min, plus préférentiellement de 1s à 10 min, notamment de 3s à 10 min, en particulier de 3s à 2 min et la pression étant comprise de 1,5 à 2000 bars, en particulier de 5 bars à 1000 bars, plus avantageusement de 50 bars à 500 bars.

4. Procédé selon la revendication 3, **caractérisé en ce que** ledit polymère fondu (I) adhère sur ladite couche (1).

5. Procédé selon la revendication 4, **caractérisé en ce que** ledit film (F) est un film monocouche (F1) est constitué d'une couche (1) comprenant une composition comprenant au moins un polyamide semi-cristallin (Psc), ladite couche (1) présentant une épaisseur d'au moins 10µm, en particulier comprise de 10 à 1000µm.

6. Procédé selon l'une des revendications 4 ou 5, **caractérisé en ce que** ledit polymère fondu (I) est un polyamide.

7. Procédé selon la revendication 3, **caractérisé en ce que** ledit polymère fondu (I) est dépourvu d'adhésion sur ledit polyamide semi-cristallin (Psc).

8. Procédé selon la revendication 7, **caractérisé en ce que** ledit film (F) est un film multicouche (F2) comprenant au moins une couche (1) comprenant une composition comprenant au moins un polyamide semi-cristallin (Psc), ladite couche (1) présentant une épaisseur comprise de 20µm à 1000µm, en particulier de 50µm à moins de 200µm.

9. Procédé selon la revendication 8, **caractérisé en ce que** ledit film multicouche (F2) comprend au moins deux couches, une couche (1) et une couche (2), les deux couches (1) et (2) adhérant l'une à l'autre, et la couche en contact avec l'élément texturant (T) étant la couche (1) comprenant la composition comprenant ledit polyamide semi-cristallin (Psc).

10. Procédé selon la revendication 9, **caractérisé en ce que** ledit polymère fondu (I) adhère sur la couche (2), ladite couche (2) étant située côté opposé à la couche (1) qui est contact avec l'élément texturant (T).

11. Procédé selon la revendication 8, **caractérisé en ce que** ledit film multicouche (F2) comprend au moins deux couches (1) et (2), la couche en contact avec l'élément texturant (T) étant la couche (1) dudit polyamide semi-cristallin (Psc), les deux couches (1) et (2) étant dépourvues d'adhésion l'une à l'autre et comprenant au moins une troisième couche (3) entre elles permettant l'adhésion entre les couches (1) et (2).

12. Procédé selon la revendication 11, **caractérisé en ce que** ledit polymère fondu (I) adhère sur la couche (2), ladite couche (2) étant située côté opposé à la couche (3) qui est contact avec la couche (1) en contact avec l'élément texturant (T).

13. Procédé selon l'une des revendications 1 à 12, **caractérisé en ce que** la couche (1) destinée à être en contact avec ledit élément texturant (T), durant l'étape d, est à une température (TT) comprise entre la Tg et Tm - 15°C de la composition de la couche (1), et de préférence entre la Tg et la Tm -15°C dudit polyamide semi-cristallin (Psc)) sur une épaisseur comprise de 5 à 50% dudit film, du coté en regard du texturant (T), la Tg étant déterminée selon ISO 11357-2 :2013 et la Tm selon ISO 11357-3 :2013.

14. Procédé selon l'une des revendications 1 à 13, **caractérisé en ce que** la composition de la couche (1) présente une transparence telle que la transmittance à 560 nm sur plaque de 1 mm d'épaisseur est supérieure ou égale à 80% déterminée selon la norme ISO 13468-2:2006, en particulier supérieure ou égale à 88%.

15. Procédé selon l'une des revendications 1 à 14, **caractérisé en ce que** la composition de la couche (1) et optionnellement le polyamide semi-cristallin (Psc) présente(nt) l'enthalpie de fusion est comprise de 30 à 50J/g en 1ère chauffe de DSC selon ISO 11357-3 :2013 à 40°C/mn.

16. Procédé selon l'une des revendications 1 à 15, **caractérisé en ce que** la composition (CPO) de la couche (1) et optionnellement le polyamide semi-cristallin (Psc) est telle que sa température de transition vitreuse (Tg) est comprise de 30 à 120°C, de préférence de 60°C à 90°C déterminée selon, ISO 11357-2 :2013, et que sa température de fusion (Tm) est comprise de 150°C à 330°C, de préférence de 150°C à 200°C, déterminée selon ISO 11357-3 :2013.

17. Procédé selon l'une des revendications 1 à 16, **caractérisé en ce que** la couche (1) dudit film monocouche (F1) ou multicouche (F2) est constituée d'une composition transparente comprenant en poids, le total étant 100% :
5 à 40% d'un polyamide amorphe (B) qui résulte essentiellement de la condensation:
soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
soit d'un acide alpha omega amino carboxylique cycloaliphatique,
soit d'une combinaison de ces deux possibilités,
et éventuellement d'au moins un monomère choisi parmi les acides alpha omega amino carboxyliques ou les éventuels lactames correspondants, les diacides aliphatiques et les diamines aliphatiques,
0 à 40% d'un polyamide souple (C) choisi parmi les copolymères à blocs polyamides et blocs polyether et les copolyamides,
0 à 20% d'un compatibilisant (D) de (Psc) et (B),
0 à 40% d'un modifiant souple (MS),
avec la condition que (C)+(D)+(MS) est compris entre 0 et 50%,
le complément à 100% d'un polyamide (Psc) semi cristallin, le polyamide (Psc) étant majoritaire par rapport à la somme (Psc) + (B) + (C) + (D).

18. Procédé selon l'une des revendications 1 à 17, **caractérisé en ce que** la couche (1) dudit film monocouche (F1) ou multicouche (F2) est constituée d'une composition transparente comprenant en poids, le total étant 100%:
5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :
les acides alpha omega amino carboxyliques,
les diacides aliphatiques,
les diamines aliphatiques,
0 à 40% d'un polyamide souple (C) choisi parmi les copolymères à blocs polyamides et blocs polyether et les copolyamides,
0 à 20% d'un compatibilisant (D) de (Psc) et (B),
(C)+(D) est compris entre 0 et 50%,
avec la condition que (B)+(C)+(D) n'est pas inférieur à 30%,
le complément à 100% d'un polyamide (Psc) semi cristallin, le polyamide (Psc) étant majoritaire par rapport à la somme (Psc) + (B) + (C) + (D).

19. Procédé selon la revendication 17 ou 18, **caractérisé en ce que** le polyamide (Psc) est choisi parmi le PA11, le PA12, le PA1012, le PA1010, le PA612 et le PA610, en particulier parmi le PA11 et le PA12, notamment le polyamide (Psc) est le PA11.

20. Procédé selon l'une des revendications 1 à 19, **caractérisé en ce qu'**un deuxième élément texturant (T), diffèrent du premier est présent entre le premier élément texturant (T) et le moule, ledit deuxième élément texturant (T) recouvrant au moins partiellement ledit premier élément texturant (T).

21. Procédé selon l'une des revendications 1 à 20, **caractérisé en ce que**, optionnellement, l'objet obtenu à l'étape e, tel que définie dans la revendication 1, revêt, par sa face comprenant le polymère fondu (I), un substrat structurel.

22. Objet obtenu par le procédé selon l'une des revendications 1 à 21.

23. Pièce comprenant au moins un objet tel que défini dans la revendication 22.

## Patentansprüche

1. Verfahren zum Herstellen eines Gegenstands, umfassend mindestens einen Film (F), umfassend mindestens eine Schicht (1), umfassend eine Zusammensetzung, umfassend mindestens ein teilkristallines Polyamid (Psc), das beim ersten Erhitzen in der DSC gemäß ISO 11357-3:2013 bei 40 °C/min eine Schmelzenthalpie von 25 J/g bis 75 J/g aufweist, wobei der Film auf der Gesamtheit oder einem Teil von mindestens einer seiner Oberflächen die Textur eines texturierenden Elements (T) aufweist,
**dadurch gekennzeichnet, dass** es die folgenden Schritte umfasst:
a. Bereitstellen einer Form (M), die auf eine Temperatur kleiner als oder gleich 120 °C, insbesondere von 20 °C bis 90 °C, eingestellt ist,
b. Aufbringen mindestens eines texturierenden Elements (T) auf die Wand der Form, vorzugsweise mit einer Dicke von 20 bis 2000 µm, vorzugsweise von 50 µm bis 1000 µm, insbesondere von 50 µm bis 500 µm, insbesondere in ebener Form, und das mindestens teilweise eine texturierte Oberfläche aufweist, wobei sich die texturierte Oberfläche auf der Seite befindet, die derjenigen, die der Form zugewandt ist, gegenüberliegt,
c. Aufbringen mindestens eines Films (F) auf die texturierte Oberfläche des texturierenden Elements (T), umfassend mindestens eine Schicht (1), umfassend eine Zusammensetzung (CPO), umfassend mindestens ein teilkristallines Polyamid (Psc), wobei die Schicht (1) dazu bestimmt ist, mit der texturierten Oberfläche des texturierenden Elements (T) in Kontakt zu sein, wobei die Dicke der Schicht (1) mindestens 10 µm beträgt, insbesondere zwischen 10 bis 1000 µm, liegt,
d. Aufbringen mindestens eines Mittels zum Erhitzen (H) auf den Film von Schritt (c), um eine Temperatur (TT) auf der dem Texturierungsmittel (T) zugewandten Seite des Films zu erreichen, die zwischen der Tg und der Schmelztemperatur (Tm) der Zusammensetzung (CPO) minus 15 °C liegt, wobei die Tm gemäß ISO 11357-3:2013 gemessen wird, und Aufbringen eines Mittels zum Ausüben von Druck (P) auf den Film, um ihn mit dem texturierenden Element (T) mit einem Druck zwischen 1,5 und 2000 bar, insbesondere zwischen 5 bar und 1000 bar, über einen Zeitraum t zwischen 0,1 s und 5 h, vorzugsweise zwischen 3 s und 10 min, in Kontakt zu bringen,
e. Entformen und Erhalten des Gegenstands, umfassend den Film, umfassend die Zusammensetzung (CPO), umfassend mindestens ein teilkristallines Polyamid (Psc), und der auf der Gesamtheit oder einem Teil von mindestens einer seiner Oberflächen die Textur des texturierenden Elements (T) aufweist.

2. Verfahren nach Anspruch 1, **dadurch gekennzeichnet, dass** die Temperatur (TT) des Films (F), umfassend die Zusammensetzung (CPO), auf einer Dicke von mindestens 10 µm zwischen der Tg und Tm - 15 °C liegt.

3. Verfahren nach einem der Ansprüche 1 oder 2,
**dadurch gekennzeichnet, dass** das Mittel zum Erhitzen (H) und Ausüben von Druck (P) darin besteht, ein eingeschmolzenes Polymer (I) bei einer Temperatur Tinj zwischen 150 °C und 350 °C über einen Zeitraum t zwischen 0,1 s und 15 min, vorzugsweise zwischen 1 s und 15 min, stärker bevorzugt zwischen 1 s und 10 min, insbesondere zwischen 3 s und 10 min, ganz besonders zwischen 3 s und 2 min, auf die Seite zu spritzen, die derjenigen gegenüberliegt, die mit dem texturierenden Element (T) des Films (F) von Schritt (c) in Kontakt kommen soll, wobei der Druck zwischen 1,5 und 2000 bar, insbesondere zwischen 5 bar und 1000 bar, stärker bevorzugt zwischen 50 bar und 500 bar, liegt.

4. Verfahren nach Anspruch 3, **dadurch gekennzeichnet, dass** das eingeschmolzene Polymer (I) an der Schicht (1) haftet.

5. Verfahren nach Anspruch 4, **dadurch gekennzeichnet, dass** der Film (F) ein einschichtiger Film (F1) ist, der aus einer Schicht (1) besteht, umfassend eine Zusammensetzung, umfassend mindestens ein teilkristallines Polyamid (Psc), wobei die Schicht (1) eine Dicke von mindestens 10 µm, insbesondere zwischen 10 und 1000 µm, aufweist.

6. Verfahren nach einem der Ansprüche 4 bis 5,
**dadurch gekennzeichnet, dass** das eingeschmolzene Polymer (I) ein Polyamid ist.

7. Verfahren nach Anspruch 3, **dadurch gekennzeichnet, dass** das eingeschmolzene Polymer (I) keine Haftung auf dem teilkristallinen Polyamid (Psc) vorweist.

8. Verfahren nach Anspruch 7, **dadurch gekennzeichnet, dass** der Film (F) ein mehrschichtiger Film (F2) ist, umfassend mindestens eine Schicht (1), umfassend eine Zusammensetzung, umfassend mindestens ein teilkristallines Polyamid (Psc), wobei die Schicht (1) eine Dicke zwischen 20 µm und 1000 µm, insbesondere zwischen 50 µm und weniger als 200 µm, aufweist.

9. Verfahren nach Anspruch 8, **dadurch gekennzeichnet, dass** der mehrschichtige Film (F2) mindestens zwei Schichten umfasst, eine Schicht (1) und eine Schicht (2), wobei die zwei Schichten (1) und (2) aneinander haften und die Schicht, die mit dem texturierenden Element (T) in Kontakt steht, die Schicht (1) ist, umfassend die Zusammensetzung, umfassend das teilkristalline Polyamid (Psc).

10. Verfahren nach Anspruch 9, **dadurch gekennzeichnet, dass** das eingeschmolzene Polymer (I) an der Schicht (2) haftet, wobei sich die Schicht (2) auf der gegenüberliegenden Seite der Schicht (1) befindet, die mit dem texturierenden Element (T) in Kontakt steht.

11. Verfahren nach Anspruch 8, **dadurch gekennzeichnet, dass** der mehrschichtige Film (F2) mindestens zwei Schichten (1) und (2) umfasst, wobei die Schicht, die mit dem texturierenden Element (T) in Kontakt steht, die Schicht (1) des teilkristallinen Polyamids (Psc) ist, wobei die zwei Schichten (1) und (2) keine Haftung aneinander vorweisen und mindestens eine dritte Schicht (3) zwischen sich umfassen, die die Haftung zwischen den Schichten (1) und (2) ermöglicht.

12. Verfahren nach Anspruch 11, **dadurch gekennzeichnet, dass** das eingeschmolzene Polymer (I) an der Schicht (2) haftet, wobei sich die Schicht (2) auf der gegenüberliegenden Seite der Schicht (3) befindet, die mit der Schicht (1) in Kontakt steht, die mit dem texturierenden Element (T) in Kontakt steht.

13. Verfahren nach einem der Ansprüche 1 bis 12,
**dadurch gekennzeichnet, dass** die Schicht (1), die mit dem texturierenden Element (T) in Kontakt kommen soll, in Schritt d bei einer Temperatur (TT) zwischen der Tg und Tm - 15 °C der Zusammensetzung der Schicht (1) liegt und vorzugsweise zwischen der Tg und der Tm -15 °C des teilkristallinen Polyamids (Psc) auf einer Dicke zwischen 5 und 50 % des Films auf der Seite, die dem Texturierungsmittel (T) zugewandt ist, wobei die Tg gemäß ISO 11357-2:2013 und die Tm gemäß ISO 11357-3:2013 bestimmt wird.

14. Verfahren nach einem der Ansprüche 1 bis 13,
**dadurch gekennzeichnet, dass** die Zusammensetzung der Schicht (1) eine solche Transparenz aufweist, dass die Transmission bei 560 nm bei einer 1 mm dicken Platte größer oder gleich 80 %, bestimmt gemäß der Norm ISO 13468-2:2006, insbesondere größer oder gleich 88 %, ist.

15. Verfahren nach einem der Ansprüche 1 bis 14,
**dadurch gekennzeichnet, dass** die Zusammensetzung der Schicht (1) und wahlweise das teilkristalline Polyamid (Psc) eine Schmelzenthalpie zwischen 30 und 50 J/g beim ersten Erhitzen in der DSC mit 40 °C/min gemäß ISO 11357-3:2013 aufweist (aufweisen).

16. Verfahren nach einem der Ansprüche 1 bis 15,
**dadurch gekennzeichnet, dass** die Zusammensetzung (CPO) der Schicht (1) und wahlweise das teilkristalline Polyamid (Psc) derart ist, dass ihre/seine Glasübergangstemperatur (Tg) zwischen 30 und 120 °C, vorzugsweise zwischen 60 °C und 90 °C, liegt, bestimmt gemäß ISO 11357-2:2013, und dass ihre/seine Schmelztemperatur (Tm) zwischen 150 °C und 330 °C, vorzugsweise zwischen 150 °C und 200 °C, liegt, bestimmt gemäß ISO 11357-3:2013.

17. Verfahren nach einem der Ansprüche 1 bis 16,
**dadurch gekennzeichnet, dass** die Schicht (1) des einschichtigen (F1) oder mehrschichtigen Films (F2) aus einer transparenten Zusammensetzung besteht, umfassend in Gewichtsprozent, wobei die Summe 100 % beträgt:
5 bis 40 % eines amorphen Polyamids (B), das hauptsächlich durch Kondensation:
entweder mindestens eines Diamins, das aus cycloaliphatischen Diaminen und aliphatischen Diaminen ausgewählt ist, und mindestens einer Disäure, die aus cycloaliphatischen Disäuren und aliphatischen Disäuren ausgewählt ist, wobei mindestens eine dieser Diamin- oder Disäureneinheiten cycloaliphatisch ist,
oder einer cycloaliphatischen alpha-omega-Aminocarbonsäure,
oder einer Kombination dieser zwei Möglichkeiten,
und gegebenenfalls mindestens eines Monomers, das aus alpha-omega-Aminocarbonsäuren oder den entsprechenden möglichen Lactamen, aliphatischen Disäuren und aliphatischen Diaminen ausgewählt ist, entsteht,
0 bis 40 % eines flexiblen Polyamids (C), das aus Copolymeren von Polyamidblöcken und Polyetherblöcken und Copolyamiden ausgewählt ist,
0 bis 20 % eines Kompatibilisators (D) von (Psc) und (B),
0 bis 40 % eines flexiblen Modifizierungsmittels (MS),
mit der Maßgabe, dass (C)+(D)+(MS) zwischen 0 und 50 % liegt,
wobei der Rest bis 100 % teilkristallines Polyamid (Psc) ist, wobei das Polyamid (Psc) in Bezug auf die Summe (Psc) + (B) + (C) + (D) überwiegt.

18. Verfahren nach einem der Ansprüche 1 bis 17,
**dadurch gekennzeichnet, dass** die Schicht (1) des einschichtigen (F1) oder mehrschichtigen Films (F2) aus einer transparenten Zusammensetzung besteht, umfassend in Gewichtsprozent, wobei die Summe 100 % beträgt:
5 bis 40 % eines amorphen Polyamids (B), das hauptsächlich durch die Kondensation mindestens eines gegebenenfalls cycloaliphatischen Diamins, mindestens einer aromatischen Disäure und gegebenenfalls mindestens einem Monomer entsteht, ausgewählt aus:
alpha-omega-Aminocarbonsäuren,
aliphatischen Disäuren,
aliphatischen Diaminen,
0 bis 40 % eines flexiblen Polyamids (C), das aus Copolymeren von Polyamidblöcken und Polyetherblöcken und Copolyamiden ausgewählt ist,
0 bis 20 % eines Kompatibilisators (D) von (Psc) und (B),
wobei (C)+(D) zwischen 0 und 50 % liegt,
mit der Maßgabe, dass (B)+(C)+(D) nicht weniger als 30 % beträgt,
wobei der Rest bis 100 % teilkristallines Polyamid (Psc) ist, wobei das Polyamid (Psc) in Bezug auf die Summe (Psc) + (B) + (C) + (D) überwiegt.

19. Verfahren nach Anspruch 17 oder 18, **dadurch gekennzeichnet, dass** das Polyamid (Psc) aus PA11, PA12, PA1012, PA1010, PA612 und PA610, insbesondere aus PA11 und PA12, ausgewählt ist, insbesondere ist das Polyamid (Psc) PA11.

20. Verfahren nach einem der Ansprüche 1 bis 19,
**dadurch gekennzeichnet, dass** ein zweites texturierendes Element (T), das sich vom ersten unterscheidet, zwischen dem ersten texturierenden Element (T) und der Form vorhanden ist, wobei das zweite texturierende Element (T) das erste texturierende Element (T) mindestens teilweise bedeckt.

21. Verfahren nach einem der Ansprüche 1 bis 20,
**dadurch gekennzeichnet, dass,** wahlweise, der in Schritt e erhaltene Gegenstand, wie in Anspruch 1 definiert, mit seiner Seite, umfassend das eingeschmolzene Polymer (I), ein Struktursubstrat beschichtet.

22. Gegenstand, erhalten durch das Verfahren nach einem der Ansprüche 1 bis 21.

23. Teil, umfassend mindestens einen Gegenstand wie in Anspruch 22 definiert.

## Claims

1. A method for preparing an object comprising at least one film (F) comprising at least one layer (1) comprising a composition comprising at least one semi-crystalline polyamide (Psc) having an enthalpy of fusion of between 25 J/g and 75 J/g during the first DSC heating according to ISO 11357-3:2013 at 40°C/min, said film having on all or part of at least one of its surfaces the texture of a texturing element (T),
**characterized in that** it comprises the following steps:
a. Providing a mold (M) set to a temperature less than or equal to 120°C, in particular between 20°C and 90°C,
b. Applying, to the wall of the mold, at least one texturing element (T), preferably with a thickness between 20 and 2000 µm, preferentially between 50 µm and 1000 µm, in particular between 50 µm and 500 µm, in particular in planar form, and having at least in part a textured surface, said textured surface being on the face opposite that facing the mold,
c. Applying, to the textured surface of said texturing element (T), at least one film (F) comprising at least one layer (1) comprising a composition (CPO) comprising at least one semi-crystalline polyamide (Psc), said layer (1) being intended for being in contact with the textured surface of the texturing element (T), the thickness of said layer (1) being at least 10 µm, in particular between 10 and 1000 µm,
d. Applying at least one heating means (H) to said film of step (c), in order to arrive at a temperature (TT) on the side of the film facing the texturing agent (T) between Tg and the melting temperature (Tm) of the composition (CPO) minus 15°C, the Tm being measured according to ISO 11357-3:2013, and applying a pressure means (P) to said film in order to bring it into contact with the texturing element (T), with a pressure between 1.5 and 2000 bars, in particular between 5 bars and 1000 bars, for a time t between 0.1 s and 5 h, preferentially between 3 s and 10 min,
e. Demolding and obtaining the object comprising said film comprising the composition (CPO) comprising at least semi-crystalline polyamide (Psc) and having on all or part of at least one of its surfaces the texture of said texturing element (T).

2. The method according to claim 1, **characterized in that** said temperature (TT) of said film (F) comprising the composition (CPO) is between Tg and Tm - 15°C, over a thickness of at least 10 µm.

3. The method according to either claim 1 or claim 2, **characterized in that** said heating means (H) and pressure means (P) consists in injecting a molten polymer (I) at a temperature Tinj between 150°C and 350°C onto the face opposite that intended for being in contact with the texturing element (T) of said film (F) of step (c), for a time t between 0.1 s and 15 min, preferentially between 1 s and 15 min, more preferentially between 1 s and 10 min, especially between 3 s and 10 min, in particular between 3 s and 2 min and the pressure being between 1.5 and 2000 bars, in particular between 5 bars and 1000 bars, more advantageously between 50 bars and 500 bars.

4. The method according to claim 3, **characterized in that** said molten polymer (I) adheres to said layer (1).

5. The method according to claim 4, **characterized in that** said film (F) is a single-layer film (F1) and consists of a layer (1) comprising a composition comprising at least one semi-crystalline polyamide (Psc), said layer (1) having a thickness of at least 10 µm, in particular between 10 and 1000 µm.

6. The method according to either claim 4 or claim 5, **characterized in that** said molten polymer (I) is a polyamide.

7. The method according to claim 3, **characterized in that** said molten polymer (I) lacks adhesion to said semi-crystalline polyamide (Psc).

8. The method according to claim 7, **characterized in that** said film (F) is a multilayer film (F2) comprising at least one layer (1) comprising a composition comprising at least one semi-crystalline polyamide (Psc), said layer (1) having a thickness between 20 µm and 1000 µm, in particular between 50 µm and less than 200 µm.

9. The method according to claim 8, **characterized in that** said multilayer film (F2) comprises at least two layers, a layer (1) and a layer (2), the two layers (1) and (2) adhering to one another, and the layer in contact with the texturing element (T) being the layer (1) comprising the composition comprising said semi-crystalline polyamide (Psc).

10. The method according to claim 9, **characterized in that** said molten polymer (I) adheres to the layer (2), said layer (2) being located on the side opposite the layer (1) which is in contact with the texturing element (T).

11. The method according to claim 8, **characterized in that** said multilayer film (F2) comprises at least two layers (1) and (2), the layer in contact with the texturing element (T) being the layer (1) of said semi-crystalline polyamide (Psc), the two layers (1) and (2) lacking adhesion to one another and comprising at least one third layer (3) therebetween allowing the adhesion between the layers (1) and (2).

12. The method according to claim 11, **characterized in that** said molten polymer (I) adheres to the layer (2), said layer (2) being located on the side opposite the layer (3) which is in contact with the layer (1) in contact with the texturing element (T).

13. The method according to any of claims 1 to 12, **characterized in that** the layer (1) intended for being in contact with said texturing element (T), during step d, is at a temperature (TT) between the Tg and the Tm - 15°C of the composition of the layer (1), and preferably between the Tg and the Tm -15°C of said semi-crystalline polyamide (Psc)) over a thickness of between 5 and 50% of said film, on the side facing the texturing agent (T), the Tg being determined according to ISO 11357-2:2013 and the Tm according to ISO 11357-3:2013.

14. The method according to any of claims 1 to 13, **characterized in that** the composition of the layer (1) has a transparency such that the transmittance at 560 nm on a plate with a thickness of 1 mm is greater than or equal to 80% determined according to standard ISO 13468-2:2006, in particular greater than or equal to 88%.

15. The method according to any of claims 1 to 14, **characterized in that** the composition of the layer (1) and optionally the semi-crystalline polyamide (Psc) has/have an enthalpy of fusion between 30 and 50 J/g during the first DSC heating according to ISO 11357-3:2013 at 40°C/min.

16. The method according to any of claims 1 to 15, **characterized in that** the composition (CPO) of the layer (1) and optionally the semi-crystalline polyamide (Psc) is such that its glass-transition temperature (Tg) is between 30 and 120°C, preferably between 60°C and 90°C determined according to ISO 11357-2:2013, and that its melting temperature (Tm) is between 150°C and 330°C, preferably between 150°C and 200°C, determined according to ISO 11357-3:2013.

17. The method according to any of claims 1 to 16, **characterized in that** the layer (1) of said single-layer (F1) or multilayer (F2) film consists of a transparent composition comprising by weight, the total being 100%:
5 to 40% of an amorphous polyamide (B) which results essentially from the condensation:
either of at least one diamine selected from the cycloaliphatic diamines and the aliphatic diamines and of at least one diacid selected from the cycloaliphatic diacids and the aliphatic diacids, at least one of these diamine or diacid units being cycloaliphatic,
or of a cycloaliphatic alpha omega amino carboxylic acid,
or of a combination of these two possibilities,
and optionally of at least one monomer selected from the alpha omega amino carboxylic acids or the optional corresponding lactams, the aliphatic diacids and the aliphatic diamines,
0 to 40% of a flexible polyamide (C) selected from the polyamide and polyether block copolymers and copolyamides,
0 to 20% of a compatibilizing agent (D) for (Psc) and (B),
0 to 40% of a flexible modifier (MS),
with the condition that (C)+(D)+(MS) is between 0 and 50%,
the remainder to 100% of a semi-crystalline polyamide (Psc), the polyamide (Psc) being the majority component with respect to the sum of (Psc) + (B) + (C) + (D).

18. The method according to any of claims 1 to 17, **characterized in that** the layer (1) of said single-layer (F1) or multilayer (F2) film consists of a transparent composition comprising by weight, the total being 100%:
5 to 40% of an amorphous polyamide (B) which results essentially from the condensation of at least one diamine, optionally cycloaliphatic, of at least one aromatic diacid and optionally of at least one monomer selected from:
the alpha omega amino carboxylic acids,
the aliphatic diacids,
the aliphatic diamines,
0 to 40% of a flexible polyamide (C) selected from the polyamide and polyether block copolymers and copolyamides,
0 to 20% of a compatibilizing agent (D) for (Psc) and (B),
(C)+(D) is comprised between 0 and 50%,
with the condition that (B)+(C)+(D) is not less than 30%,
the remainder to 100% of a semi-crystalline polyamide (Psc), the polyamide (Psc) being the majority component with respect to the sum of (Psc) + (B) + (C) + (D).

19. The method according to claim 17 or claim 18, **characterized in that** the polyamide (Psc) is selected from PA11, PA12, PA1012, PA1010, PA612 and PA610, in particular from PA11 and PA12, and in particular the polyamide (Psc) is PA11.

20. The method according to any of claims 1 to 19, **characterized in that** a second texturing element (T) different from the first is present between the first texturing element (T) and the mold, said second texturing element (T) at least partially covering said first texturing element (T).

21. The method according to any of claims 1 to 20, **characterized in that,** optionally, the object obtained in step e, as defined in claim 1, coats, on its side comprising the molten polymer (I), a structural substrate.

22. An object obtained by the method according to any of claims 1 to 21.

23. A part comprising at least one object as defined in claim 22.
